# EUROPEAN PATENT APPLICATION

(11) **EP 1 970 851 A1**
(43) Date of publication of application: **17.09.2008**
(21) Application number: 08102547.0
(22) Date of filing: 12.03.2008
(51) Int. Cl.: G06Q 30/00

(54) **A method for receiving an approval**

(30) Priority: 13.03.2007 TR 200701552
(71) Applicant: Fonoklik Iletisim Hizmetleri Ve Ticaret Anonim, 34398 Istanbul (TR)
(72) Inventor: Yurekli, Ahmet Fonoklik Iletisim Hizmetleri Ve Ticaret, Itu Ayazaga Yerleskesi Ayazaga Istanbul (TR)
(74) Representative: Dericioglu, Ekin

(57) **Abstract**

The present invention relates to a method for an establishment to receive an approval or authorization from one or more than one person, when necessary.

## Description

Technical Field

The present invention relates to a method for an establishment to receive an approval or authorization from one or more than one person, when necessary.

Prior Art

The establishments may sometimes require an approval or authorization from the person concerned to execute some transactions. For example, transactions like increasing credit card limit of a bank's client or setting up an automatic payment for a telephone bill can only be made through approval or authorization by the client. The establishment's waiting for that approval or authorization may result in not meeting the business targets on a short period of time. Instead, reaching a client via phone call and requesting the necessary approval or authorization help realize the transactions efficiently and in a shorter time.

In the state of the art a person calls the establishment in question, has his/her identity checked and gives the approval or authorization for a transaction to a live operator or via the IVR (interactive voice response) system.

In another embodiment, the person sends an SMS to the establishment, the SMS being written in a specified format and thus the approval or authorization is received.

In KR20010059671 a system is disclosed, in which the client are reminded of unpaid bills and the bill is paid upon the approval by the client.

Brief Description of the Invention

The objective of the present invention is to provide a method for receiving an approval or authorization from the person concerned, without charging him/her any expense.

Another objective of the present invention is to provide a method for receiving an approval or authorization from the person concerned in a shorter time.

Detailed Description of the Invention

The method for receiving an approval according to the present invention is illustrated in the accompanying drawings, in which:

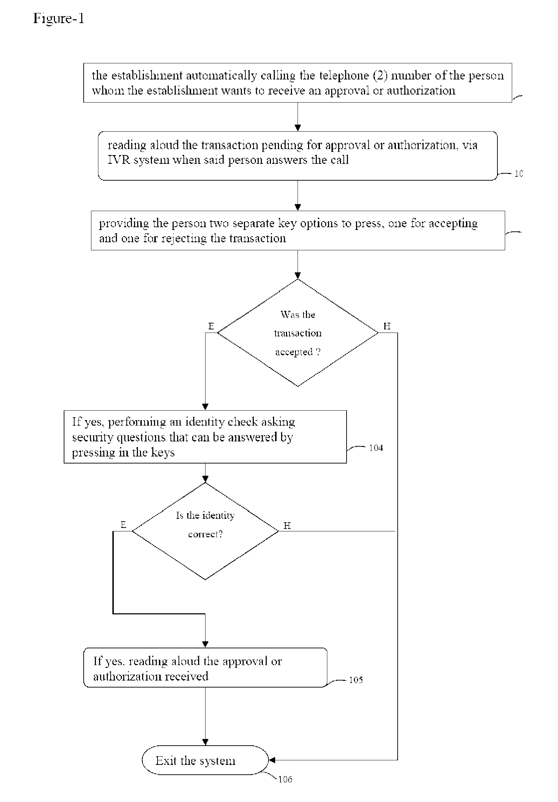

Figure 1 is a flow chart of the method for receiving an approval according to the invention.

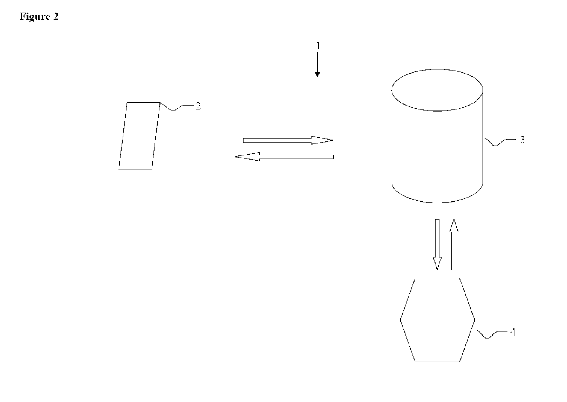

Figure 2 is a block diagram of the method for receiving an approval according to the invention.

The parts in the figures are each given a reference numeral as follows:

1. Method

2. Telephone

3. Server

4. Establishment

The method (1) for receiving an approval according to the invention comprises at least one mobile or fixed line telephone (2) enabling receiving the approval or authorization via speech and/or dialing using IVR system, and transmitting the result and at least one server (3) enabling communication between the establishment (4) and the person to give approval or authorization and saving the approval information, and characterized by

- automatically calling the telephone (2) number of the person whom the establishment wants to receive an approval or authorization (101)

- reading aloud the transaction pending for approval or authorization, via IVR system when said person answers the call (102)

- providing the person two separate key options to press, one for accepting and one for rejecting the transaction (103)

- Was the transaction accepted?

If no, exit the system (106)

- If yes, performing an identity check asking security questions that can be answered by pressing the keys (104)

- Is the identity correct?

If no, exit the system (106)

- If yes, reading aloud the approval or authorization received (105)

- Exit the system (106).

IVR systems reply to the caller or a person called and read out the key options to the caller, and perceive the keys pressed by the user and let the user reach information on one or more than one database.

In the method (1) for receiving an approval according to the invention, if unanswered, the system continues calling the user up to a specified number times within the framework of specified rules.

The method (1) for receiving an approval according to the invention receives an approval or authorization from the persons concerned by calling them. As a result the method (1) enables the transaction to be completed in a shorter time without any expense charged to the client.

Within the scope of this main concept, it is possible to develop various applications of the method (1) for receiving an approval according to the invention, and the invention cannot be limited to the examples stated herein and is actually as in the claims.

## Claims

1. A method (1) for receiving an approval comprising at least one mobile or fixed line telephone (2) enabling receiving the approval or authorization via speaking and/or dialing, and transmitting the result and at least one server (3) enabling communication between the establishment (4) and the person to give approval or authorization and saving the approval information, and **characterized by** ; the establishment automatically calling the telephone (2) number of the person whom the establishment wants to receive an approval or authorization (101) ; reading aloud the transaction pending for approval or authorization, via IVR system when said person answers the call (102) ; providing the person two separate key options to press, one for accepting and one for rejecting the transaction (103) ;Was the transaction accepted? ;If no, exit the system (106) ; If yes, performing an identity check asking security questions that can be answered by pressing in the keys (104) ;Is the identity correct? ; If no, exit the system (106) ; If yes, reading aloud the approval or authorization received (105) ; Exit the system (106).
